# EUROPÄISCHE PATENTSCHRIFT

(11) **EP 2 436 506 B1**
(45) Veröffentlichungstag und Bekanntmachung des Hinweises auf die Patenterteilung: **22.10.2014**
(21) Anmeldenummer: 11183024.6
(22) Anmeldetag: 28.09.2011
(51) Int. Cl.: B29C 49/64, B29C 35/08

(54) **Vorrichtung und Verfahren zum Erwärmen von Kunststoffvorformlingen**
Method and device for heating thermoplastic preforms
Dispositif et procédé destinés au chauffage de préformes en matériau thermoplastique

(30) Priorität: 04.10.2010 DE 102010047223
(43) Veröffentlichungstag der Anmeldung: 04.04.2012
(73) Patentinhaber: Krones AG, 93073 Neutraubling (DE)
(72) Erfinder: Senn, Konrad, 93059 Regensburg (DE)
(74) Vertreter: Hannke, Christian

(56) Entgegenhaltungen:
- EP-A2- 2 210 728
- WO-A1-2004/067262
- US-A- 4 795 871

## Beschreibung

Die vorliegende Erfindung bezieht sich auf eine Vorrichtung und ein Verfahren zum Erwärmen von Kunststoffvorformlingen. Derartige Vorrichtungen und Verfahren sind aus dem Stand der Technik seit langem bekannt. Bei der Herstellung von Kunststoffbehältnissen werden üblicherweise Kunststoffvorformlinge erwärmt und anschließend in einem Umformungsvorgang, wie beispielsweise einem Streckblasvorgang, zu Kunststoffbehältnissen expandiert. Dabei sind aus dem Stand der Technik bereits seit längerem Infrarotöfen bekannt, welche die Kunststoffvorformlinge durchlaufen und in welchen die Kunststoffvorformlinge erwärmt werden. Daneben sind In jüngerer Zeit auch Mikrowellenöfen bekannt geworden, in denen die Kunststoffvorformlinge durch Mikrowellen erwärmt werden.

Aus der DE 10 2007 022 386 A1 ist eine derartige Erwärmungsvorrichtung für Kunststoffvorformlinge bekannt. Der Gegenstand dieser Offenbarung wird hiermit durch Bezugnahme vollständig auch zum Gegenstand der vorliegenden Anmeldung gemacht. Ein Problem bei der Erwärmung von Kunststoffvorformlingen für den Streckblasprozess mit Mikrowellen in einem Hohlraumresonator besteht darin, die Kunststoffvorformlinge gleichmäßig zu erwärmen. Aus der oben erwähnten Druckschrift sowie der DE 10 2008 024 108 ist ein Verfahren bekannt, bei dem versucht wird, die Längsseiten des Kunststoffvorformlings gleichmäßig zu erwärmen. Problematisch sind jedoch die Kuppenbereiche derartiger Kunststoffvorformlinge, das heißt, die unteren Enden.

Aus der gattungsbildenden EP 2 210 728 A2 ist eine Erwärmungsvorrichtung für Kunststoffvorformlinge bekannt. Dabei werden die Kunststoffvorformlinge in einem Resonator mit Mikrowellen beaufschlagt. Die WO 2004/067262 beschreibt ein Verfahren und eine Vorrichtung zum Herstellen von medizinischen Artikeln mittels Mikrowellen-Energie. Dabei dient die Mikrowellen-Energie zum Schmelzen von Polymermaterial.

Aufgrund des Verhaltens von elektromagnetischen Feldern an Grenzflächen zweier unterschiedlicher Dielektrika ist das elektrische Feld in den Bereichen der Übergänge, welche parallel zum elektrischen Feld stehen, deutlich höher als in den Bereichen, die senkrecht dazu stehen.

Da sich aber aufgrund von Brechungsgesetzen der Winkel des elektrischen Feldes E ändert, ändert sich auch dessen Betrag. Dies hat zur Folge, dass E-Vektoren, die annähernd parallel zur Grenzfläche eintreten annähernd konstant bleiben, und bei steil eintreffenden Vektoren der Betrag stark abnimmt. Daher wird die Seite des Kunststoffvorformlings vergleichsweise stark erwärmt und die Kuppe bleibt kalt.

Dabei finden im Stand der Technik teilweise sog. Single - Moden - Hohlraumresonatoren Anwendung. Diese erlauben auf Grund ihrer Größe und der vom Magnetron abgestrahlten Frequenz nur eine sogenannte H10 Mode da sich aufgrund der Ausbreitungsgeseize und der Grenzwellenlängen keine anderen Resonanzen ausbilden können. Da auf den Metalloberflächen die E-Feldlinien senkrecht stehen (denn alle nicht senkrechten Anteile würden über den metallischen Leiter abfließen), steht das Feld der H10 Mode senkrecht zwischen den beiden parallelen Wandungen des Resonators. Für die Grenzwellenlänge λc (unterhalb derer sich im Resonator keine Welle ausbilden kann) gilt die Beziehung λc = 2a, wobei a die Länge der breiteren Seite (z.B. eines Hohlleiters) ist.

Dies bedeutet, dass sich der Kunststoffvorformling im Bereich seiner Kuppe, insbesondere rund um den Anspritzpunkt wesentlich schwerer erwärmen lässt als an den Längseiten.

Eine mögliche Lösung für dieses Problem ist in der DE 10 2007 022 386 offenbart, wobei ein Reflektorelement beschrieben ist. Ein derartiges metallisches Reflektorelement führt dazu, dass sich das elektrische Feld in der Nähe der leitenden Oberfläche verzerrt und bei richtiger Geometriewahl auch stark erhöht. Durch diese lokale Erhöhung ist es nun möglich, die Kuppenregion besser zu erwärmen. Andererseits weisen derartige Reflektorelemente" auch Nachteile auf. So können sie beispielsweise verschmutzen und müssen daher mit einer zusätzlichen Reinigungseinheit, wie zum Beispiel einer fest installierten Bürste, gereinigt werden.

Der vorliegenden Erfindung liegt daher die Aufgabe zu Grunde, eine Vorrichtung zum Erwärmen von Kunststoffvorformlingen zur Verfügung zu stellen, welche eine gleichmäßige Erwärmung der Kunststoffvorformlinge ermöglicht. Vorteilhaft soll dabei auf die erwähnten Reflektorelemente verzichtet werden.

Diese Aufgabe wird erfindungsgemäß durch den Gegenstand der unabhängigen Ansprüche gelöst. Vorteilhafte Ausführungsformen und Weiterbildungen sind Gegenstand der Unteransprüche.

Eine erfindungsgemäße Vorrichtung zum Erwärmen von Behältnissen und insbesondere von Kunststoffvorformlingen weist wenigstens eine Mikrowellenerzeugungseinheit auf, welche ein elektromagnetisches Wechselfeld in Form von Mikrowellen erzeugt. Daneben weist die Vorrichtung eine Mikrowellenübertragungseinheit auf, welche die von der Mikrowellenerzeugungseinheit erzeugten Mikrowellen an eine Resonatoreinheit überträgt. Daneben weist die Vorrichtung auch eine Transporteinrichtung auf, welche die Kunststoffvorformlinge gegenüber der Resonatoreinheit transportiert, wobei diese Resonatoreinheit ein einen Aufnahmeraum zur Erwärmung der Kunststoffvorformlinge ausbildendes Resonatorgehäuse aufweist.

Erfindungsgemäß ist eine Resonatoreinheit derart ausgebildet, dass die elektrischen Feldlinien eines elektrischen Feldes, welches das Behältnis erwärmt, wenigstens teilweise schräg bezüglich einer Längsrichtung des Behältnisses angeordnet sind. Bevorzugt sind sämtliche der Feldlinien schräg zu der Längsrichtung des Behältnisses angeordnet bzw. ausgerichtet, wobei besonders bevorzugt die einzelnen Feldlinien auch parallel zueinander sind. Es wäre jedoch auch möglich, dass nur die Richtungen einiger der Feldlinien innerhalb des Resonatorgehäuses schräg bezüglich der Längsrichtung der Kunststoffvorformlinge sind. Insbesondere sind zumindest teilweise jene Feldlinien schräg gegenüber der Längsrichtung des Kunststoffvorformlings, welche während des Erwärmungsprozesses geometrische den Kuppenbereich des Kunststoffvorformlings kreuzen. Es wäre jedoch auch möglich, sich die Richtungen der einzelnen Feldlinien innerhalb des Resonators ändern.

Diese Ausrichtung der Feldlinien wird dabei bevorzugt über eine bestimmte Anordnung der Innenwandungen des Resonatorgehäuses erreicht. Bevorzugt stehen diese Innenwandungen senkrecht zu den jeweiligen Feldlinien

Im Stand der Technik ist üblicherweise der Resonator derart angeordnet, dass die Feldlinien des elektrischen Feldes parallel zu einer Längsrichtung der Kunststoffvorformlinge verlaufen. Dies bringt - wie oben erwähnt - insbesondere Probleme im Kuppenbereich des Kunststoffvorformlings mit sich.

Durch die Schrägstellung bzw. Drehung des elektrischen Feldes ist eine gleichmäßigere Erwärmung des Kunststoffvorformlings möglich. Mit anderen Worten wird das elektrische Feld im Resonator relativ zur Längsrichtung des Kunststoffvorformlings bzw. zur Preformachse gedreht. Durch diese Drehung wandert die Stelle mit dem Minimum des elektrischen Feldes an den Seitenbereich der Kuppe des Kunststoffvorformlings, wobei der Bereich mit dem Maximum des elektrischen Feldes auf die andere Seite fällt.

Vorteilhaft weist die Vorrichtung eine Dreheinrichtung auf, welche das Behältnis zumindest zeitweise während dessen Erwärmung - insbesondere um seine Längsachse - dreht. Wenn nun der Kunststoffvorformling in Rotation versetzt wird, überlagern sich über die Zeit Minima und Maxima des elektrischen Feldes und so lässt sich mit der Bewegung des Kunststoffvorformlings - insbesondere auch in dessen Längsrichtung - dessen Kuppe gleichmäßig erwärmen.

Bei einer vorteilhaften Ausführungsform ist die Resonatoreinheit derart ausgebildet, dass ein Winkel zwischen den Feldlinien des elektrischen Feldes und der Längsrichtung der Kunststoffbehältnisse zwischen 10° und 45°, bevorzugt zwischen 15° und 25°, liegt. Prinzipiell wäre ein Kippen der Feldlinien zwischen 0° und 90° möglich, da hier jedoch auch die übrigen Bereiche der Kunststoffvorformlinge erwärmt werden müssen und insbesondere auch Randbereiche, wie unter dem Tragring des Kunststoffvorformlings, ausreichend erwärmt werden müssen, ist der angegebene Winkelbereich zwischen 10° und 45° besonders bevorzugt.

Erfindungsgemäß ist das Resonatorgehäuse schräg bezüglich der Längsrichtung der Kunststoffbehältnisse angeordnet. Bei bisherigen Anwendungen sind die parallelen Wandungen des Hohlraumresonators senkrecht zur Achse des Kunststoffvorformlings und somit ist auch das elektrische Feld parallel zur Z-Achse des Kunststoffvorformlings. Wird nun der Resonator aus dieser senkrechten Lage gedreht, dreht sich auch das elektrische Feld, das sich in diesem Resonator als stehende Welle ausbildet. Es wäre jedoch auch möglich, dass in dem Resonatorgehäuse entsprechend schräge Innenwandungen vorgesehen sind.

Bei einer weiteren vorteilhaften Ausführungsform weist das Resonatorgehäuse einen Kuppenbereich auf, über den die Mikrowellen in die Resonatoreinheit eingeführt werden.

Bei einer weiteren vorteilhaften Ausführungsform weist die Vorrichtung eine Bewegungseinrichtung auf, welche das Kunststoffbehältnis durch eine Bewegung entlang dessen Längsrichtung oder schräg hierzu in das Resonatorgehäuse einbringt.

Vorteilhaft ist das Resonatorgehäuse an einem beweglichen Träger angeordnet. Dabei kann es sich beispielsweise um einen kreisförmigen Träger handeln, an dem eine Vielzahl von derartigen Resonatorgehäusen angeordnet ist. Auf diese Weise werden die Kunststoffvorformlinge erwärmt, während sie auf einer kreisförmigen Bahn bewegt werden.

Die vorliegende Erfindung ist weiterhin auf ein Verfahren zum Erwärmen von Kunststoffbehältnissen und insbesondere von Kunststoffvorformlingen gerichtet. Dabei wird in einem ersten Verfahrensschritt ein Kunststoffvorformling in ein Resonatorgehäuse eingebracht. Anschließend wird der Kunststoffvorformling mit einem elektrischen Feld beaufschlagt und hierdurch der Kunststoffvorformling unter Verwendung dieses elektrischen Feldes erwärmt. Dabei wird das genannte elektrische Feld in einer Mikrowellenerzeugungseinheit erzeugt. Weiterhin wird anschließend der Kunststoffvorformling aus dem Resonatorgehäuse entfernt. Erfindungsgemäß verlaufen die Feldlinien des das Behältnis erwärmenden elektrischen Feldes schräg zu einer Längsrichtung des Kunststoffvorformlings.

Bevorzugt werden jeweils die Kunststoffvorformlinge gegenüber dem Resonatorgehäuse bewegt, es wäre jedoch auch möglich, umgekehrt das Resonatorgehäuse zu bewegen.

Vorteilhaft wird das Kunststoffbehältnis wenigstens zeitweise während der Beaufschlagung durch das elektrische Feld bezüglich seiner Längsrichtung gedreht. Insbesondere durch das Zusammenwirken der besagten Schrägstellung und der Drehung des Kunststoffvorformlings bzgl. seiner Längsrichtung kann eine gleichmäßige Erwärmung auch des Kuppenbereiches des Kunststoffvorformlings erreicht werden. Vorteilhaft wird der Kunststoffvorformling wäh-rend seiner Erwärmung im wesentlichen um eine Volldrehung oder um ganzzahlige Vielfache einer Volldrehung gedreht.

Bei einem weiteren vorteilhaften Verfahren wird das Kunststoffbehältnis durch eine Bewegung entlang seiner Längsrichtung in das Resonatorgehäuse eingebracht.

Weitere Vorteile und Ausführungsformen ergeben sich aus den beigefügten Figuren.

Darin zeigen:
- Fig. 1: eine perspektivische Ansicht einer Erwärmungsvorrichtung nach dem Stand der Technik;
- Fig. 2: eine weitere Darstellung einer Erwärmungsvorrichtung nach dem Stand der Technik;
- Fig. 3: eine Darstellung eines Resonators nach dem Stand der Technik;
- Fig. 4: eine Darstellung eines erfindungsgemäßen Resonators;
- Fig. 5a, 5b: zwei Gegenüberstellungen zur Veranschaulichung der Feldverteilung innerhalb eines Kunststoffvorformlings;
- Fig. 6a, 6b: zwei weitere Darstellungen zur Gegenüberstellung der Erwärmung von Kunststoffvorformlingen.

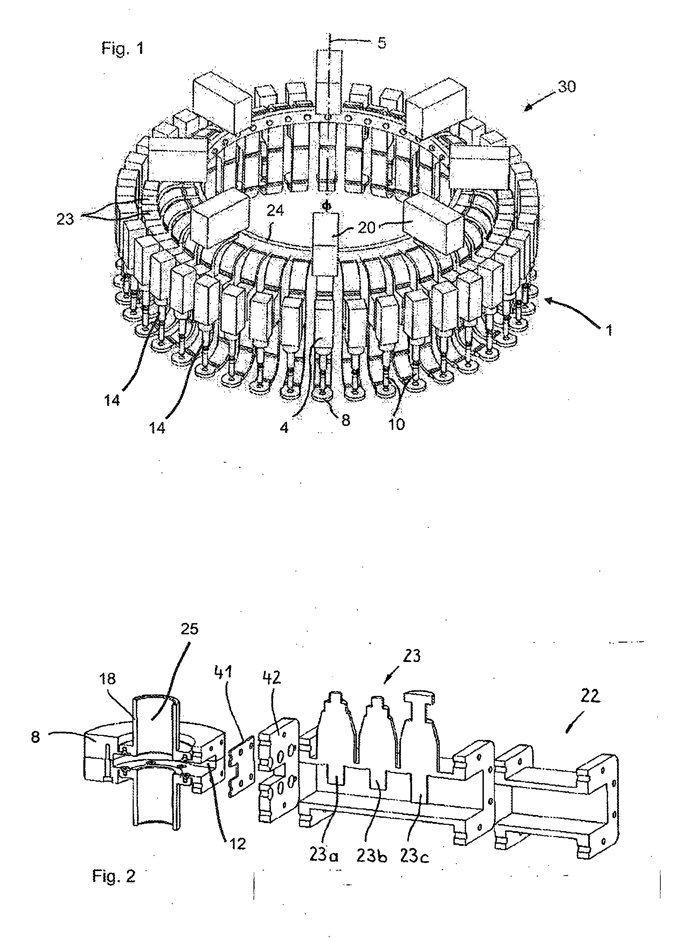

Fig. 1 zeigt eine hier kreisrund ausgebildete Erwärmungsvorrichtung 1 für Vorformlinge 10, wobei diese im Laufe der Erwärmung gemäß dem Umfang der Erwärmungsvorrichtung mittels eines Trägers 24 entlang einer Kreisbande bewegt werden. Der Träger 24 stellt hier gleichzeitig einen Rechteckhohlleiter dar und ist Bestandteil einer insgesamt mit 4 bezeichneten Transporteinrichtung. An diesem Träger ist eine Vielzahl von Mikrowellenerzeugungseinheiten 20 bzw. Mikrowellenkompaktköpfen 20 vorgesehen. Daneben weist diese Vorrichtung 1 Mikrowellenerwärmungseinheiten 30 auf, die ebenfalls bezüglich einer Maschinenachse 5 umlaufen.

Die Bezugszeichen 8 beziehen sich auf Resonatorgehäuse, in welche die Kunststoffvorformlinge 10 eingeschoben werden. Das Bezugszeichen 14 bezieht sich auf Transporteinrichtungen, welche die Kunststoffvorformlinge bewegen, beispielsweise entlang ihrer Längsachse L gegenüber den Resonatorgehäusen 8 bewegen.

Fig. 2 zeigt eine detailliertere Darstellung einer Vorrichtung nach dem Stand der Technik. Für diese Ausführungsform sind neben einem Hohlleiter 22 auch drei Tuning-Stifte 23a, 23b und 23c vorgesehen, welche zusammen eine Abstimmungseinheit 23 zur Abstimmung einer Mikrowellenleistung bilden. Das Bezugszeichen 42 kennzeichnet ein Befestigungselement und das Bezugszeichen 41 eine Blende, welche zum Einführen der Mikrowellen in das Resonatorgehäuse 8 dienen. Das Bezugszeichen 25 kennzeichnet einen Aufnahmeraum, der zur Erwärmung der Kunststoffvorformlinge (nicht gezeigt) dient. Das Bezugszeichen 18 bezieht sich auf einen Längsabschnitt des Aufnahmeraums 25. Das Bezugszeichen 12 bezieht sich auf einen Einkoppelbereich, über den die Mikrowellen in die Resonatoreinheit 6 eingekoppelt werden.

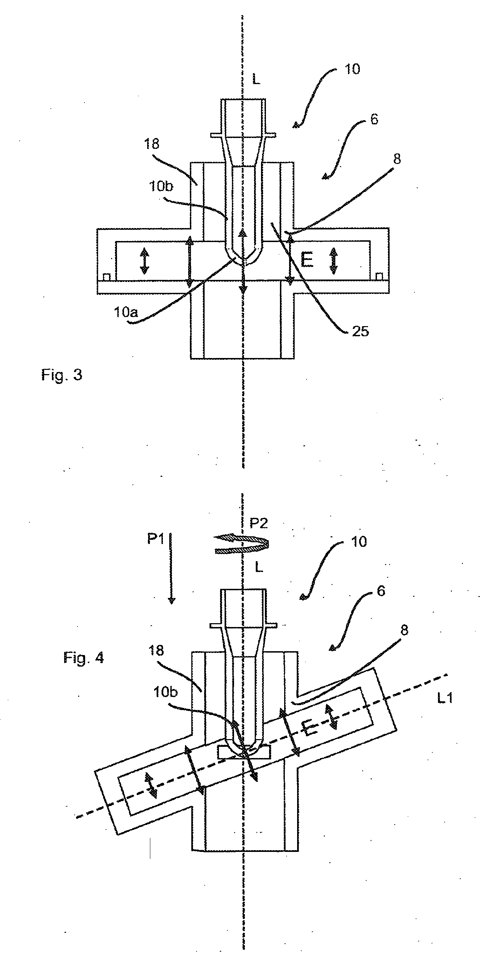

Fig. 3 zeigt eine Schnittdarstellung eines Resonatorgehäuses 6 nach dem Stand der Technik. Man erkennt, dass der Kunststoffvorformling 10 hier entlang seiner Längsrichtung L in das Gehäuse eingeführt werden kann. Das elektrische Feld E innerhalb des Resonators wird dabei im Bereich der Kuppe 10a des Kunststoffvorformlings stark abgeschwächt und erwärmt daher den Kunststoffvorformling in diesem Kuppenbereich nur schwach. Dies führt dazu, dass in diesem schwach erwärmten Bereich auch nur in geringem Maße eine Verstreckung des Materials im nachfolgenden Blasvorgang auftritt.

Fig. 4 zeigt eine Schnittdarstellung eines erfindungsgemäßen Resonators 6. Man erkennt, dass hier das Resonatorgehäuse 8 schräg bezüglich der Längsrichtung L des Kunststoffvorformlings angeordnet ist. Genauer gesagt erstreckt sich eine Längsrichtung L1 des Resonatorgehäuses 8 in einem schrägen Winkel gegenüber der Längsrichtung L des Kunststoffvorformlings und steht nicht senkrecht zu diesem. Hieraus ergibt sich, dass auch die Feldlinien E des im Resonatorgehäuse entstehenden elektrischen Feldes nicht in der Längsrichtung des Kunststoffvorformlings verlaufen, sondern schräg hierzu. Auf diese Weise wird ― wie unten genauer erläutert - auch der Kuppenbereich 10a des Kunststoffvorformlings effizienter erwärmt. Der Kunststoffvorformling wird entlang der Richtung P1 in das Resonatorgehäuse eingeführt und entgegen dieser Richtung P1 wieder aus dem Resonatorgehäuse 8 herausgezogen. Das Bezugszeichen P2 veranschaulicht die Drehung des Kunststoffvorformlings bzgl. seiner Längsachse.

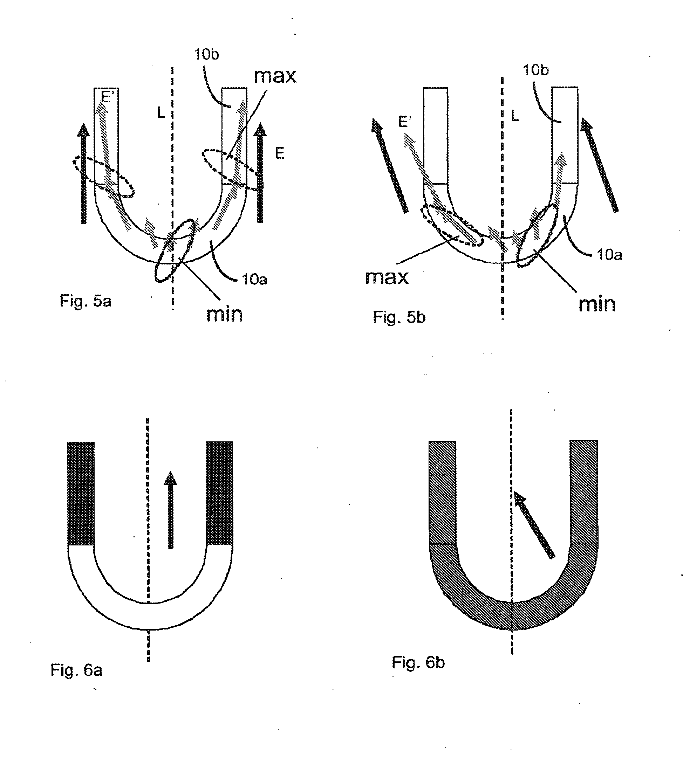

Die Figuren 5a und 5b veranschaulichen die Feldverteilung im Kunststoffvorformling. Bei der in Fig. 5a gezeigten Darstellung verlaufen die Feldlinien des elektrischen Feldes parallel zu der Längsrichtung L des Kunststoffvorformlings. Dies bedeutet, dass in den Bereichen 10b des Kunststoffvorformlings ein starkes elektrisches Feld (entsprechend lange Pfeile) und daher eine erhöhte Erwärmung des Kunststoffvorformlings auftritt. In dem Kuppenbereich hingegen tritt nur eine geringe bzw. minimale Erwärmung des Kunststoffvorformlings auf, da sich hier das elektrische Feld stark abgeschwächt wird.

Bei der in Fig. 5b gezeigten Darstellung ist hingegen das elektrische Feld E schräg bezüglich der Längsrichtung des Kunststoffvorformlings angeordnet. In diesem Falle ist das elektrische Feld in dem mit "max" gekennzeichneten Bereich stärker und in dem mit "min" gezeichneten Bereich schwächer, d.h. der Bereich minimaler Feldstärke ist gegenüber der Längsrichtung L des Kunststoffvorformlings verschoben. Wird der Kunststoffvorformling noch um seine Längsachse L gedreht, so tritt eine gleichmäßige Erwärmung des Kuppenbereiches 10a des Kunststoffvorformlings auf. Daneben wäre es auch denkbar, den Kunststoffvorformling um eine Achse zu drehen, welche parallel zu der Längsrichtung des Kunststoffvorformlings ist, daher den Kunststoffvorformling exzentrisch zu drehen. Auch wäre es denkbar, den Kunststoffvorformling um eine Achse zu drehen, welche schräg zu seiner Längsrichtung steht. Auch in diesem Falle wäre jedoch im Ergebnis das elektrische Feld E wenigstens zeitweise schräg zu der Drehachse des Kunststoffvorformlings.

Die Figuren 6a und 6b zeigen die Erwärmung des Kunststoffvorformlings nach dem Stand der Technik (Fig. 6a) und gemäß der vorliegenden Erfindung (Fig. 6b). Wie in den Figuren 6a und 6b veranschaulicht, findet im Gegensatz zum Stand der Technik durch die erfindungsgemäße Vorgehensweise eine gleichmäßige Erwärmung aller Bereiche des Kunststoffvorformlings statt.

Es wäre weiterhin auch möglich, das schräge elektrische Feld gegenüber der Längsrichtung auch dafür zu verwenden, um bewusst unterschiedliche Bereiche des Kunststoffvorformlings unterschiedlich stark zu erwärmen. Dies könnte beispielsweise auch dadurch geschehen, dass der Kunststoffvorformling nicht um seine Längsrichtung, sondern um eine hierzu parallele, jedoch seitlich versetzte, Achse gedreht wird. Auch könnte bewusst während der Erwärmung der Kunststoffvorformling nicht um eine Volldrehung gedreht werden, sondern beispielsweise um eineinhalb Drehungen oder eine halbe Drehung und dergleichen. In diesem Falle könnte beispielsweise erreicht werden, dass die Außenwandung des Kunststoffvorformlings in bestimmten Bereichen stärker erwärmt wird und in anderen Bereichen schwächer. In einem anschließenden Umformungsprozess könnten auf diese Weise Behältnisse mit nicht kreisförmigem Querschnitt, z. B. ovale Behältnisse, hergestellt werden.

Bei einer weiteren vorteilhaften Ausführungsform wird der Kunststoffvorformling während seiner Erwärmung nicht kontinuierlich mit gleicher Geschwindigkeit gedreht, sondern schrittweise bzw. mit wechselnden Drehgeschwindigkeiten. Auf diese Weise können bestimmte Bereiche der Umfangswandung stärker erwärmt werden als andere Bereiche, und so kann bei der Expansion wiederum ein nicht kreisförmiges Behältnis geblasen werden.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Vorrichtung
- 4: Transporteinrichtung
- 5: Maschinenachse
- 6: Resonatoreinheit
- 8: Resonatorgehäuse
- 10: Kunststoffvorformling
- 10a: Kuppenbereich des Kunststoffvorformlings
- 10b: Längsbereiche des Kunststoffvorformlings
- 12: Einkoppelbereich
- 14: Transporteinrichtung
- 18: Längsabschnitt des Aufnahmeraums 25
- 20: Mikrowellenerzeugungseinheiten
- 22: Mikrowellenübertragungseinheit bzw. Hohlleiter
- 23: Abstimmungseinheit
- 23a, 23b, 23c: Tuning - Stifte
- 24: Träger
- 25: Aufnahmeraum
- 30: Mikrowellenerwärmungseinheiten
- 41: Blende
- 42: Befestigungselement

- L: Längsrichtung des Kunststoffvorformlings
- L1: Längsrichtung des Resonatorgehäuses
- E: elektrisches Feld
- P1: Bewegungsrichtung des Kunststoffbehältnisses
- P2: Drehung des Kunststoffbehältnisses

## Patentansprüche

1. Vorrichtung (1) zum Erwärmen von Behältnissen (10) und insbesondere von Kunststoffvorformlingen (10) mit wenigstens einer Mikrowellenerzeugungseinheit (20), welche ein elektromagnetisches Wechselfeld in Form von Mikrowellen erzeugt, einer Mikrowellenübertragungseinheit (22), welche die von der Mikrowellenerzeugungseinheit (2) erzeugten Mikrowellen an eine Resonatoreinheit (6) überträgt, und mit einer Transporteinrichtung (4), welche die Kunststoffvorformlinge (10) gegenüber der Resonatoreinheit (6) transportiert, wobei die Resonatoreinheit (6) ein einen Aufnahmeraum (25) zur Erwärmung der Kunststoffvorvormlinge (10) ausbildendes Resonatorgehäuse (8) aufweist,
**dadurch gekennzeichnet, dass**
das Resonatorgehäuse (8) der Resonatoreinheit (6) schräg bezüglich der Längsrichtung (L) der Kunststoffbehältnisse (10) angeordnet ist, sodass die elektrischen Feldlinien (E) eines elektrischen Feldes, welches das Behältnis (10) erwärmt, wenigstens teilweise schräg bezüglich einer Längsrichtung (L) des Behältnisses angeordnet sind.

2. Vorrichtung (1) nach Anspruch 1,
**dadurch gekennzeichnet, dass**
die Vorrichtung eine Dreheinrichtung (14) aufweist, welche das Behältnis (10) zumindest zeitweise während dessen Erwärmung um seine Längsachse (L) dreht.

3. Vorrichtung (1) nach wenigstens eine der vorangegangenen Ansprüche,
**dadurch gekennzeichnet, dass**
die Resonatoreinheit (6) derart ausgebildet ist, dass ein Winkel zwischen den Feldlinien (E) und der Längsrichtung (L) der Kunststoffbehältnisse zwischen 10° und 45°, bevorzugt zwischen 15° und 25° liegt.

4. Vorrichtung (1) nach wenigstens einem der vorangegangenen Ansprüche,
**dadurch gekennzeichnet, dass**
das Resonatorgehäuse einen Einkoppelbereich (12) aufweist, über den die Mikrowellen in die Resonatoreinheit (6) eingeführt werden.

5. Vorrichtung (1) nach wenigstens einem der vorangegangenen Ansprüche,
**dadurch gekennzeichnet, dass**
die Vorrichtung (1) eine Bewegungseinrichtung aufweist, welche das Kunststoffbehältnis durch eine Bewegung entlang seiner Längsrichtung (L) in das Resonatorgehäuse einbringt.

6. Vorrichtung (1) nach wenigstens einem der vorangegangenen Ansprüche,
**dadurch gekennzeichnet, dass**
das Resonatorgehäuse (8) an einem beweglichen Träger (24) angeordnet ist.

7. Verfahren zum Erwärmen von Kunststoffbehältnissen (10) und insbesondere von kunststoffvorformlingen (10), mit den Schritten,
- Einbringen eines Kunststoffbehältnisses (10) in ein schräg bezüglich der Längsrichtung (L) der Kunststoffbehältnisse (10) angeordnetes Resonatorgehäuse (8)
- Beaufschlagen des Kunslstoffbehältnisses (10) mit einem elektrischen Feld (E) und Erwärmen des Kunststoffbehältnisses (10) unter Verwendung dieses elektrischen Feldes, wobei die Feldlinien (E) des das Behältnis erwärmenden elektrischen Feldes wenigstens teilweise schräg zu einer Längsrichtung (L) des Kunststoffbehältnisses (10) verlaufen und
- Herausbewegen des Kunststoffbehältnisses (10) aus dem Resonatorgehäuse (8).

8. Verfahren nach Anspruch 7,
**dadurch gekennzeichnet, dass**
das Kunststoffbehältnis (10) wenigstens zeitweise während der Beaufschlagung
durch das elektrische Feld bezüglich seiner Längsrichtung (L) gedreht wird.

9. Verfahren nach einem der Ansprüche 7 oder 8,
**dadurch gekennzeichnet, dass**
das Kunststoffbehältnis (10) durch eine Bewegung entlang seiner Längsrichtung in das Resonatorgehäuse (8) eingebracht wird.

## Claims

1. An apparatus (1) for heating containers (10) and in particular plastics material preforms (10), comprising at least one microwave generating unit (20) that generates an electromagnetic alternating field in the form of microwaves, a microwave transfer unit (22) that transfers the microwaves generated by the microwave generating unit (2) to a resonator unit (6), and comprising a transport unit (4) that transports the plastic preforms (10) relative to the resonator unit (6), said resonator unit (6) having a resonator housing (8) forming a receiving chamber (25) for heating the plastic preforms (10), **characterised in that** the resonator housing (8) of the resonator unit (6) is arranged in an oblique manner with respect to the longitudinal direction (L) of the plastics material containers (10) such that the electric field lines (E) of an electric field that heats the container (10) are arranged at least partially obliquely in relation to a longitudinal direction (L) of the container.

2. The apparatus (1) as claimed in claim 1,
**characterised in that** the apparatus includes a rotation unit (14) that rotates the container (10) at least at times during the heating thereof about the longitudinal axis (L) thereof.

3. The apparatus (1) as claimed in at least one of the preceding claims,
**characterised in that** the resonator unit (6) is designed in such a way that an angle between the field lines (E) and the longitudinal direction (L) of the plastic containers is between 10° and 45°, preferably between 15° and 25°.

4. The apparatus (1) as claimed in at least one of the preceding claims,
**characterised in that** the resonator housing has a coupling-in area (12), via which the microwaves are introduced into the resonator unit (6).

5. The apparatus (1) as claimed in at least one of the preceding claims,
**characterised in that** the apparatus (1) has a movement device that introduces the plastic preform into the resonator housing by moving it along the longitudinal direction (L) thereof.

6. The apparatus (1) as claimed in at least one of the preceding claims,
**characterised in that** the resonator housing (8) is arranged on a movable carrier (24).

7. A method for heating plastics material containers (10) and in particular plastics material preforms, including the following steps:
- introducing a plastics material preform (10) into a resonator housing (8) being arranged in an oblique manner with respect to the longitudinal direction (L) of the plastics material containers (10);
- applying an electric field (E) onto the plastics material container (10) and heating the plastics material preform using said electric field, the field lines (E) of the electric field heating the container extending at least partially in an oblique manner with respect to a longitudinal direction (L) of the plastics material container and
- removing the plastics material preform from the resonator housing (8).

8. The apparatus as claimed in claim 7,
**characterised in that** the plastics material container (10) is rotated at least at times during the application of the electric field in relation to the longitudinal direction (L) thereof.

9. The method as claimed in one of the claims 7 or 8,
**characterised in that** the plastics material container (10) is introduced into the resonator housing (8) by moving it along the longitudinal direction thereof.

## Revendications

1. Dispositif (1) destiné à chauffer des récipients (10) et en particulier des préformes en matière plastique (10), pourvu d'au moins une unité de production de micro-ondes (20), laquelle produit un champ alternatif électromagnétique sous forme de micro-ondes, d'une unité de transfert de micro-ondes (22), laquelle transfère les micro-ondes produites par l'unité de production de micro-ondes (2) sur une unité résonateur (6), et d'un dispositif de transport (4), lequel transporte les préformes en matière plastique (10) par rapport à l'unité résonateur (6), l'unité résonateur (6) comprenant un boîtier (8) formant un espace de logement (25) destiné à chauffer les préformes en matière plastique (10),
**caractérisé en ce que**
le boîtier de résonateur (8) de l'unité résonateur (6) est disposé de manière inclinée par rapport à la direction longitudinale (L) des récipients en matière plastique (10), de telle manière que les lignes de champ électriques (E) d'un champ électrique, lequel chauffe le contenant (10), sont disposées au moins en partie de manière inclinée par rapport à une direction longitudinale (L) du récipient.

2. Dispositif (1) selon la revendication 1, **caractérisé en ce que**
le dispositif comprend un moyen de rotation (14), lequel amène le récipient (10) en rotation autour de son axe longitudinal (L) au moins temporairement pendant le chauffage de ce dernier.

3. Dispositif (1) selon au moins l'une des revendications précédentes, **caractérisé en ce que**
l'unité résonateur (6) est conçue de telle manière qu'un angle entre les lignes de champ (E) et la direction longitudinale (L) des récipients en matière plastique est compris entre 10° et 45°, de préférence entre 15° et 25°.

4. Dispositif (1) selon au moins l'une des revendications précédentes, **caractérisé en ce que**
le boîtier de résonateur comprend une zone d'injection (12) par l'intermédiaire de laquelle les micro-ondes sont introduites dans l'unité résonateur (6).

5. Dispositif (1) selon au moins l'une des revendications précédentes, **caractérisé en ce que**
le dispositif (1) comprend une unité de déplacement, laquelle introduit le récipient en matière plastique dans le boîtier de résonateur en le faisant se déplacer le long de sa direction longitudinale (L).

6. Dispositif (1) selon au moins l'une des revendications précédentes, **caractérisé en ce que**
le boîtier de résonateur (8) est disposé sur un support mobile (24).

7. Procédé de chauffage de récipients en matière plastique (10) et en particulier de préformes en matière plastique (10), comprenant les étapes suivantes à
- introduire un récipient en matière plastique (10) dans un boîtier de résonateur (8) disposé de manière inclinée par rapport à la direction longitudinale (L) des récipients en matière plastique (10),
- exposer le contenant en matière plastique (10) à un champ électrique (E) et chauffer le récipient en matière plastique (10) au moyen de ce champ électrique, les lignes de champ (E) du champ électrique chauffant le contenant s'étendant au moins en partie de manière inclinée par rapport à une direction longitudinale (L) du récipient en matière plastique (10) et
- faire sortir le récipient en matière plastique (10) du boîtier de résonateur (8).

8. Procédé selon la revendication 7, **caractérisé en ce que**
le récipient en matière plastique (10) est amené en rotation au moins temporairement par rapport à sa direction longitudinale (L) pendant son exposition au champ électrique.

9. Procédé selon l'une quelconque des revendications 7 ou 8, **caractérisé en ce que**
le récipient en matière plastique (10) est introduit dans le boîtier de résonateur (8) en effectuant un déplacement le long de sa direction longitudinale.
